# EUROPÄISCHE PATENTSCHRIFT

(11) **EP 1 029 388 B1**
(45) Veröffentlichungstag und Bekanntmachung des Hinweises auf die Patenterteilung: **15.05.2002**
(21) Anmeldenummer: 99931050.1
(22) Anmeldetag: 10.06.1999
(51) Int. Cl.: H01T 19/00, B29C 59/10

(54) **CORONA-STATION ZUR VORBEHANDLUNG VON EINER MATERIALBAHN**
CORONA STATION FOR THE PRELIMINARY PROCESSING OF A STRIP MATERIAL
POSTE A EFFET DE COURONNE POUR LE PRETRAITEMENT D'UNE BANDE DE MATERIAU

(30) Priorität: 17.06.1998 DE 19827008; 13.07.1998 DE 19831054; 03.08.1998 DE 19834911
(43) Veröffentlichungstag der Anmeldung: 23.08.2000
(73) Patentinhaber: arcotec GmbH, 71297 Mönsheim (DE)
(72) Erfinder: BLOSS, Fritz, D-71297 Mönsheim (DE); DIPPMANN, Klaus, D-75233 Niefern (DE)
(74) Vertreter: Maser, Jochen, Dipl.-Ing.
(86) Internationale Anmeldenummer: EP9903989
(87) Internationale Veröffentlichungsnummer: WO9966615

(56) Entgegenhaltungen:
- EP-A- 0 426 880
- EP-A- 0 510 891
- EP-A- 0 524 415
- DE-A- 2 458 499
- DE-A- 19 538 176

## Beschreibung

Die Erfindung betrifft eine Corona-Station zur beidseitigen Vorbehandlung von einer Materialbahn gemäß dem Oberbegriff des Anspruchs 1.

Aus der DT 24 58 499 A1 ist eine Vorrichtung zur Behandlung von Werkstoffen mittels Corona-Entladung bekannt geworden, welche für eine beidseitige Bahnbehandlung einer Folie vorgesehen ist. Hierfür wird eine Elektrode und eine Gegenelektrode eingesetzt, wobei die Gegenelektrode als Walzenelektrode zur Führung und Umlenkung der Folie vorgesehen ist. Auf dieser Walzenelektrode ist ein Dielektrikum aus einem Integral- bzw. Strukturschaum vorgesehen. Durch die zwischen der Folie und in den Vertiefungen der Poren vorgesehene Luft soll eine Vorbehandlung der der Walzenelektrode zugeordneten Seite der Folie gegeben sein. Diese Vorrichtung weist den Nachteil auf, daß eine vollflächige Behandlung der Oberfläche der der Walzenelektrode zugewandten Seite nicht ermöglicht ist. Es bleibt eine unbehandelte Struktur aufgrund des Integral- bzw. Strukturschaums zurück.

Aus der EP 0 426 880 geht eine Vorrichtung gemäß Oberbegriff des Anspruchs 1 hervor, die im Aufbau der aus der DT 24 58 499 A1 bekannten Vorrichtung entspricht. Bei dieser Vorrichtung ist vorgesehen, daß die Gegenelektrode ein vorgegebenes Muster mit einer gleichförmigen Rasterung aufweist, um dieses bestimmte Muster auf der der Gegenelektrode zugeordneten Seite der Bahn aufzubringen. Eine vollständige Vorbehandlung der Oberfläche der Folie, welche zur Gegenelektrode weist, ist durch diese Vorrichtung nicht ermöglicht.

Des weiteren ist aus der EP 0 524 415 A2 eine gattungsfremde Vorrichtung zur Entfernung von Staubpartikeln auf Materialbahnen bekannt geworden, welche zwei parallel zueinander verlaufende, stabförmige, an ein entgegengesetztes Potential angeschlossene Sprühelektroden aufweist, zwischen denen die Materialbahn hindurchläuft. Dabei werden die Schmutzpartikel aufgeladen, so daß diese sich leicht von der Materialbahn lösen und abgesaugt werden können. Diese Vorrichtung weist zwar Sprühelektroden auf, jedoch ist diese Vorrichtung nicht für die Vorbehandlung von Materialbahnen einsetzbar. Selbst wenn diese Vorrichtung verwendet werden sollte, würden folgende Nachteile auftreten. Bei dieser Vorrichtung sind vor und nach den Sprühelektroden drehbar gelagerte Leitwalzen erforderlich, die derart in ihrer Umfangsgeschwindigkeit aufeinander abgestimmt sein müssen, damit eine gewisse Bahnspannung während der Durchführung der Materialbahn durch die Vorrichtung aufrechterhalten wird. Zum einen ist dies erforderlich, um die Materialbahn durch Anliegen an den Sprühelektroden nicht zu beschädigen und zum anderen, um einen gleichmäßigen Luftspalt auf der Oberseite und Unterseite zu den Sprühelektroden zu gewährleisten, damit eine hinreichende Oberflächenbehandlung ermöglicht ist. Des weiteren weist auch diese Vorrichtung einen apparativ aufwendigen Aufbau auf. Die sich daraus ergebenden Nachteile hinsichtlich des Raumbedarfs, der Montage, der Wartung usw. sind offensichtlich. Des weiteren ist die Ausfallsrate gegenüber einer einzigen Corona-Station doppelt so hoch.

Der Erfindung liegt deshalb die Aufgabe zugrunde, eine Corona-Station zu schaffen, die auf einfache und kostengünstige Weise eine auf beiden Seiten vollständige Oberflächenbehandlung der Materialbahn ermöglicht, ohne die Materialbahn zu beschädigen.

Erfindungsgemäß wird diese Aufgabe durch die Merkmale des Anspruchs 1 gelöst.

Durch das Einblasen von Luft mit zumindest einer vor der Gegenelektrode angeordneten Luftdüse wird erzielt, daß die Materialbahn nur teilweise an der Gegenelektrode anliegt, so daß zwischen der Gegenelektrode und der zu behandelnden Materialbahn ein mehr oder weniger vollständig ausgebildeter Luftspalt gebildet ist. Dadurch wird sowohl die zu den Elektroden weisende Oberfläche als auch die zur Gegenelektrode weisende Oberfläche der Materialbahn vollständig oberflächenbehandelt, da an beiden Oberflächen ein Luftspalt bzw. Quasi-Luftspalt ausgebildet ist. Durch das zusätzliche Einblasen von Luft können sich Luftpolster in den Vertiefungen bilden, die in der Gesamtheit wie ein Quasi-Luftspalt wirken. Gleichzeitig kann ein Überstrahleffekt erzielt werden, der die linien- oder punktförmigen Berührungen der Materialbahn an der Gegenelektrode überstrahlt, so daß auch die zur Gegenelektrode weisende Oberfläche der Materialbahn nach dem Verlassen vollständig oberflächenbehandelt ist.

Somit wurde entgegen den bisherigen Bemühungen, an der Gegenelektrode keine oder eine auf bestimmte Muster definierte Vorbehandlung durchzuführen, nunmehr ein Weg gegangen, wodurch eine vollständige doppelseitige Bahnbehandlung einer Materialbahn mit einer Corona-Station ermöglicht ist.

Nach einer vorteilhaften Ausgestaltung der Erfindung ist vorgesehen, daß unmittelbar nach dem Abheben der Materialbahn von der Gegenelektrode eine weitere Elektrode vorgesehen ist. Dadurch kann der Überstrahleffekt zusätzlich verstärkt werden.

Nach einer weiteren vorteilhaften Ausgestaltung der Erfindung ist vorgesehen, daß die Rasterung quer zur Transportrichtung der Materialbahn zumindest keine wesentliche Vorzugsrichtung aufweist. Dadurch kann erzielt werden, daß eine gleichmäßige Abwicklung bzw. Umlenkung der Materialbahn an der Gegenelektrode ermöglicht ist, ohne daß ein Verzug oder ein Verlaufen der Materialbahn gegenüber der Förderrichtung auftreten kann. Des weiteren kann einer Faltenbildung während der Umlenkung entgegengewirkt werden.

Nach einer weiteren vorteilhaften Ausgestaltung der Erfindung ist vorgesehen, daß die Vertiefungen in mehreren verschiedenen Rastermustern angeordnet oder in teilweise gleiche oder verschiedene Rastermuster über die Umfangsfläche verteilt sind. Dadurch kann ermöglicht sein, daß beispielsweise nur bestimmte Oberflächenabschnitte behandelt werden. Dadurch kann ein bestimmtes Muster aufgrund des beispielsweise anschließenden Druckens ermöglicht sein, da ohne CoronaBehandlung die entsprechenden Abschnitte keine Beschichtungsmaterialien aufnehmen können.

Die Vertiefungen werden vorteilhafterweise spanlos durch eine Rändel- oder Kordelvorrichtung in die Umfangsfläche eingebracht. Des weiteren kann vorteilhafterweise vorgesehen sein, daß durch Laserbearbeitung oder Funkenerosion oder durch weitere alternative Bearbeitungsvorgänge, wie beispielsweise durch chemisches Abtragen oder Aufbringen einer Beschichtung, eine rasterförmige oder strukturierte Anordnung von Vertiefungen oder aber auch eine unregelmäßige Anordnung von Vertiefungen oder eine Oberflächenrauhigkeit erzielt werden kann, die die Bildung eines zumindest teilweisen Luftspaltes zwischen der Gegenelektrode und der zu behandelnden Oberfläche der Materialbahn ermöglicht.

Nach einer weiteren vorteilhaften Ausgestaltung der Erfindung ist vorgesehen, daß an dem Gehäuse der Corona-Station oder getrennt davon für die coronabehandelte Oberfläche an der Gegenelektrode eine Absaugvorrichtung vorgesehen ist. Dadurch kann das Ozongas abgesaugt und entsprechend den Sicherheitsvorschriften entsorgt bzw. aufbereitet werden.

Durch die Erfindung ist ermöglicht, daß eine bisher aus dem Stand der Technik bekannte Vorrichtung für die einseitige Bahnbehandlung nunmehr für die doppelseitige Materialbahnbehandlung einsetzbar und auch nachrüstbar ist.

Die Erfindung wird nunmehr anhand eines bevorzugten Ausführungsbeispiels beschrieben. Es zeigen:
- Figur 1: eine schematische Darstellung einer erfindungsgemäßen Corona-Station,
- Figur 2a: eine schematische Ansicht einer erfindungsgemäß ausgestalteten Gegenelektrode mit einem Rändelmuster, welches quer zur Transportrichtung verläuft,
- Figur 2b: eine schematische Ansicht einer erfindungsgemäß ausgestalteten Gegenelektrode mit einem Rändelmuster, welches rautenförmig ausgebildet ist,
- Figur 3: einen stark vergrößerten Ausschnitt von aneinandergrenzenden Rändelmustern in Fig. 2a und b auf einer Gegenelektrode,
- Figur 4: eine vergrößerte schematische Querschnittsdarstellung der quer zur Transportrichtung ausgestalteten Rändelung,
- Figur 5: eine schematisch vergrößerte Querschnittsdarstellung des rautenförmigen Rändelmusters und
- Figur 6: eine schematisch vergrößerte Draufsicht auf das Rändelmuster gemäß Figur 5.

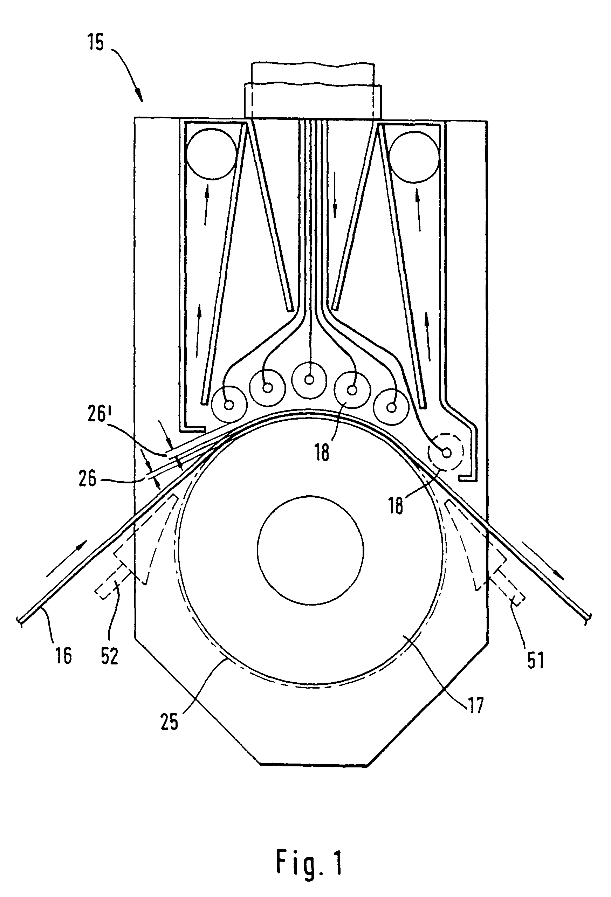

Figur 1 zeigt eine Corona-Station 15 für die Vorbehandlung einer Materialbahn 16, die nachfolgend bedruckt, beschichtet oder dergleichen wird. Bei der Materialbahn 16 kann es sich um alle Substrate handeln, die kontinuierlich oder intermittierend in Maschinen über Rollen gefördert werden. Es können beispielsweise homogene Werkstoffe, ebenso Schaumstoffe oder Gitterwerkstoffe sein, die sowohl leitend als auch nichtleitend in ihrer Eigenschaft sind. Beispielsweise werden teilleitfähige Stoffe den leitfähigen Stoffen bzw. Materialbahnen zugeordnet. Die Geometrie der Materialbahn ist zumeist derart, daß die Dicke der Materialbahn kleiner als die Breite ist. Beispielsweise kann bei der Vorbehandlung einer Kunststoffolie die Dikke variieren von 0,01 bis 5 mm und die Breite von beispielsweise 30 bis 10.000 mm gehen. Es versteht sich, daß die Anpassung in Breite und Dicke der zu behandelnden Materialbahnen auch an Spezialfälle anpaßbar ist.

Die Corona-Station 15 weist Elektroden 18 auf, die einer Gegenelektrode 17 zugeordnet sind. Die Gegenelektrode 17 ist vorzugsweise als nicht angetriebene Walze ausgebildet. Die Materialbahn 16 umschlingt die Gegenwalze 17 beispielsweise um 90° bis 180°.

Die Spannung für die Elektroden 18 wird in einem Generator erzeugt, wobei in Abhängigkeit der Behandlung die entsprechende Leistung variiert werden kann. Die in Figur 1 dargestellte Corona-Station 15 entspricht im wesentlichen der aus dem Stand der Technik bekannten Corona-Station für die einseitige Vorbehandlung von Materialbahnen 16.

Die erfindungsgemäße Corona-Station 15 unterscheidet sich jedoch in der Ausgestaltung der Gegenelektrode 17, die in Abhängigkeit an das vorzubehandelnde Material angepaßt ist. Die erfindungsgemäße Gegenelektrode 17 weist im Gegensatz zu der aus dem Stand der Technik bekannten Gegenelektrode keine glatte Oberfläche auf, sondern Vertiefungen 25, die strichliniert dargestellt sind.

Dieses Ausführungsbeispiel mit einer aus leitendem Material ausgebildeten Gegenelektrode 17 ermöglicht die Vorbehandlung von nichtleitfähigen Materialbahnen. Bei dieser Ausgestaltung werden die Elektroden 18 mit Hochspannung versorgt, wohingegen die Gegenelektrode 17 ein Erdpotential aufweist. Durch die Ausgestaltung der Vertiefungen 25 auf der Umfangfläche der Gegenelektrode 17 ist ermöglicht, daß die Materialbahn 16 nicht vollflächig auf der Gegenelektrode 17 anliegt und sich quasi ein Luftspalt 26 bildet, so daß die Corona-Entladung im Luftspalt 26 stattfindet. Dadurch kann erzielt werden, daß zusätzlich zu dem üblichen Luftspalt 26' einer Corona-Station 15 zur einseitigen Bahnbehandlung der zwischen den Elektroden 18 und der Materialbahn 16 gebildet ist, ein zweiter Quasi-Luftspalt 26 zwischen der Gegenelektrode 17 und der Materialbahn 16 gebildet wird, wodurch eine doppelseitige Vorbehandlung der Materialbahn 16 durch Corona-Entladungen ermöglicht ist.

Bei der Behandlung einer leitfähigen Materialbahn 16 ist vorgesehen, daß sowohl an der Elektrode 18 als auch an der Gegenelektrode 17 Hochspannung anliegt, wobei an der leitfähigen Materialbahn 16 das Erdpotential anliegt. Die Gegenelektrode 17 weist eine als Dielektrikum ausgebildete Umfangssfläche auf, in der ebenfalls die Vertiefungen 25 vorgesehen sind. Vorteilhafterweise ist die Gegenwalze 17 isoliert gelagert. Dadurch kann eine leitfähige Materialbahn 16, wie beispielsweise Aluminiumfolie, Metallfolien, metallisierte Folien oder dergleichen durch Corona-Entladung beidseitig vorbehandelt werden.

In Abzugsrichtung der Materialbahn 16 gesehen ist nach und/oder seitlich der Gegenelektrode 17 vorteilhafterweise eine Absaugvorrichtung 51 vorgesehen, durch die das durch die Corona-Entladung gebildete Ozon abgesaugt wird.

Zur Bildung des Quasi-Luftspaltes 26 ist vor der Gegenelektrode 17 in Förderrichtung der Materialbahn 16 eine Luftdüse 52 vorgesehen, die einen Quasi-Luftspalt 26 bildet. Die Luftdüse 52 kann sich über die gesamte Breite der Walze erstrecken oder nur partiell wirken. Des weiteren kann die Schlitzbreite der Luftdüse 52 unterschiedliche Abschnitte in Länge und/oder Breite aufweisen.

Des weiteren kann vorteilhafterweise vorgesehen sein, daß unmittelbar nach dem Abheben der Materialbahn 16 vor der Gegenelektrode 17 eine Elektrode 18 angeordnet ist, um einen Überstrahl-Effekt auf der zur Gegenelektrode 17 weisenden Fläche zu verstärken oder eine zusätzliche Corona-Entladung durchzuführen.

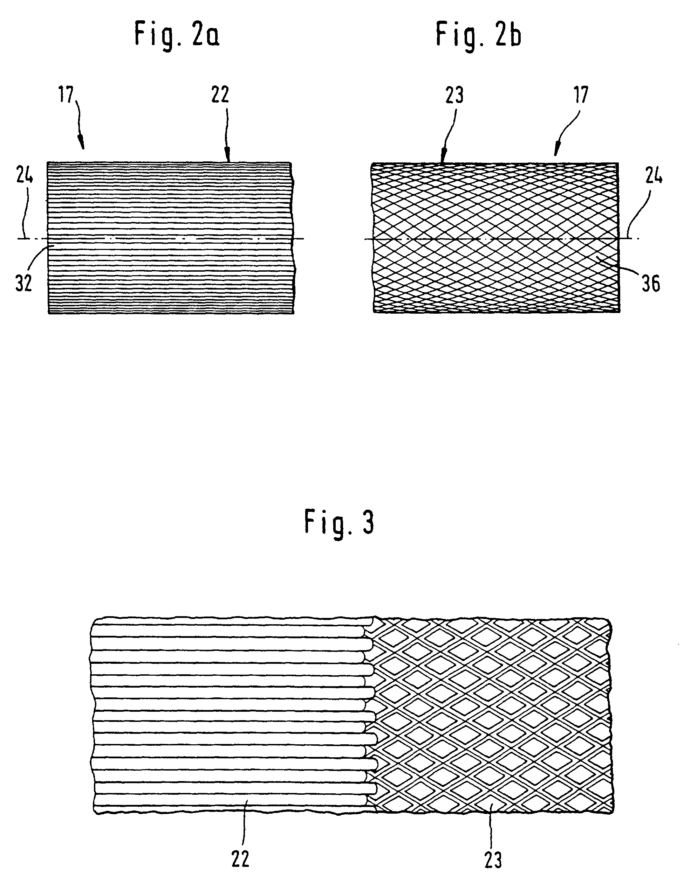

In den nachfolgenden Figuren 2 bis 6 werden Ausführungsbeispiele von Vertiefungen 25 und deren Zusammenwirken mit der nicht vollflächig an der Gegenelektrode 17 anliegenden Materialbahn 16 näher erörtert.

In Fig. 2a ist eine Gegenelektrode 17 dargestellt, die als Walze ausgebildet ist. Diese weist Vertiefungen 32 auf, die sagittal zur geometrischen Mittenachse 24 angeordnet sind. Diese Vertiefungen 32 bilden eine Rändelung 22, die parallel zur geometrischen Rotations- bzw. Längsachse 24 ausgebildet sind. Diese Längsriffelung ist rechtwinklig zur Transportförderrichtung der Materialbahn 16 vorgesehen.

In Fig. 2b ist eine alternative Ausführungsform von Vertiefungen 36 dargestellt. Diese bilden eine rautenförmige Rändelung 23, die in Analogie zu den Vertiefungen 32 ebenfalls sagittal zur geometrischen Mittenachse 24 ausgebildet sind.

Die konkrete Ausgestaltung der Vertiefungen 25, 32, 36 kann eine Vielzahl von Variationen aufweisen, wobei gewisse Mindestvoraussetzungen gegeben sein müssen, wie nachfolgend noch ausgeführt wird.

Die Gegenelektrode 17 kann an ihrer Umfangsfläche beispielsweise nur eine Rändelung 22 oder 23 aufweisen. Es kann jedoch auch vorgesehen sein, daß eine beliebige Anordnung der Rändelungen 22, 23, ggf. auch nur teilweise auf der Gegenelektrode 17, vorgesehen sein kann, die in Abhängigkeit des jeweiligen Anwendungsfalles angepaßt werden können. Darüber hinaus können weitere Arten von Vertiefungen in Kombination vorgesehen sein.

Des weiteren kann vorgesehen sein, daß die Vertiefungen 25 nur abschnittsweise sowohl in radialer als auch in axialer Richtung vorgesehen sein können, so daß beispielsweise auf die Materialbahn 16 durch die Vorbehandlung eine Art Muster aufgebracht werden kann, wodurch Teilflächen der Materialbahn 16 oberflächenbehandelt sind und andere Teilflächen unbehandelt bleiben.

Des weiteren kann vorgesehen sein, daß einzelne Vertiefungen verhältnismäßig groß ausgebildet sind, so daß diese aufgrund des großen Freiraumes zwischen der Materialbahn 16 und der Gegenelektrode 17 als Isolation wirken, wodurch in diesem Bereich keine Vorbehandlung erfolgt. Somit kann abschnittsweise eine einseitige Vorbehandlung der Materialbahn 16 auf der zu den Elektroden 18 weisenden Fläche ermöglicht sein. Dieser Effekt kann auch durch Einsetzen von Isolationsmaterial in der Gegenelektrode 17 gegeben sein.

Die lineare Rändelung 22 gemäß Fig. 2a weist nach dem jetzigen Kenntnisstand sehr ähnliche oder gleiche Eigenschaften auf, wie die Rändelung 23 gemäß Fig. 2b. Es ist jedoch denkbar, daß durch weitere Modifizierungen der Rändelung 22 oder 23 hinsichtlich der Ausgestaltung der Oberfläche und der Größe der Vertiefungen 32, 36 als auch der Breite der Vertiefungen 32, 36 als auch der Größe und Form der dazwischenliegenden Abschnitte 33 weitere positive Effekte erzielt werden können, die ermöglichen, daß eine teilweise und/oder vollständige Oberflächenbehandlung der Materialbahn 16 ermöglicht ist.

In Fig. 3 ist beispielsweise eine Vergrößerung eines Überganges der Rändelung 22 in die Rändelung 23 dargestellt. Der Übergang beeinträchtigt die Vorbehandlung der Oberfläche in diesem Bereich nicht, sofern eine derartige Kombination auf einer Gegenelektrode vorgesehen ist.

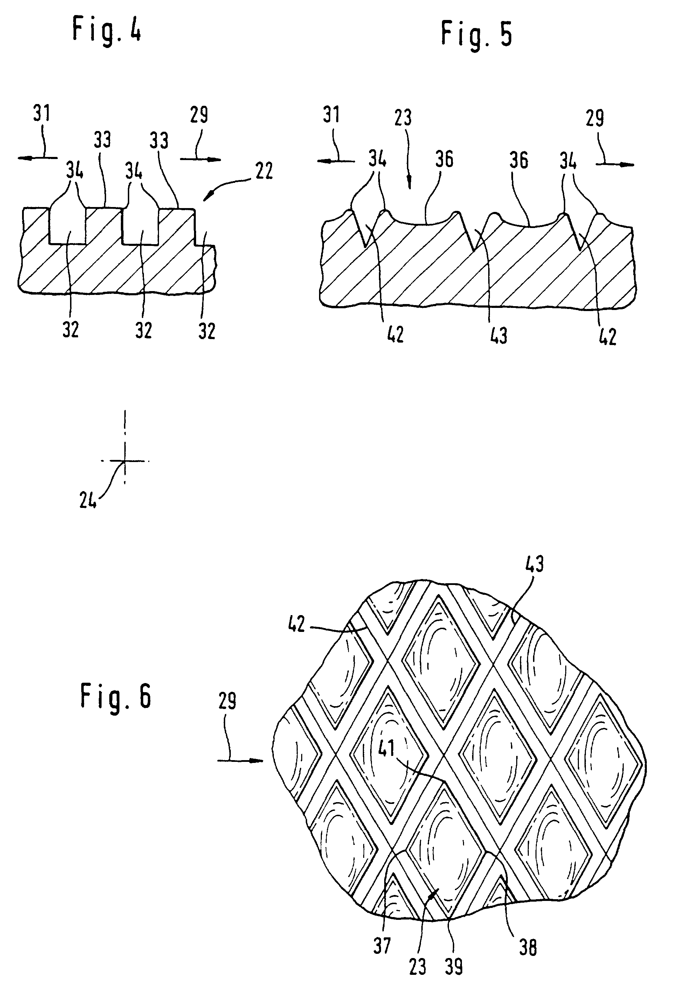

In Fig. 4 zeigt eine stark vergrößerte Ansicht im Querschnitt der Rändelung 22. Der Pfeil 29 zeigt die Rotationsrichtung hinsichtlich der geometrischen Längsachse 24. Diese kann auch entgegengesetzt gemäß Pfeil 31 gerichtet sein. Dies kann beispielsweise dann vorteilhaft sein, wenn man eine beim Betrieb in Richtung 29 verbrauchte Rolle um 180° verdreht, so daß dann die Drehrichtung entsprechend dem Pfeil 31 vorliegt.

Die Rändelung 22 weist parallel zur geometrischen Achse 24 verlaufende längliche Vertiefungen 32 auf, die einen U-förmigen oder rechteckförmigen Querschnitt oder dergleichen aufweisen können. Die zwischen den Vertiefungen 32 ausgebildeten Abschnitte 33, die die Umfangsfläche bilden, können vorteilhafterweise auf einem Kreisradius liegen und gekrümmt sein. Alternativ kann vorgesehen sein, daß diese Abschnitte 33 geradlinig ausgebildet sind, so daß bei der Umschlingung der Materialbahn 16 um die Umfangsfläche der Gegenelektrode 17 zwischen den äußeren Eckpunkten 34 der Abschnitte 33 ein kleiner Hohlraum sich ausbildet, um die Anlagefläche der Materialbahn 16 zur Umfangsfläche der Gegenelektrode zu verringern. Die länglichen Vertiefungen 32 sind in ihrer Breite bzw. in der Teilung derart ausgestaltet, daß die Materialbahn 16 nicht oder nur in vernachlässigender Weise in die längliche Vertiefung 32 hineinsackt. Die Höhe der Vertiefung 32 wird an die Breite der Vertiefung 32 angepaßt, so daß sichergestellt sein kann, daß die Materialbahn nicht mit dem Grund der Vertiefung in Kontakt kommen kann. Die Eckpunkte 34 können vorteilhafterweise als Verrundung ausgebildet sein, so daß auf der Materialbahn keine Abdrücke zurückbleiben.

Die Ausgestaltung der Berührpunkte bzw. -linien zwischen der Materialbahn 16 und der Gegenelektrode 17 sind vorteilhafterweise aufeinander abgestimmt. Einerseits soll erzielt werden, daß die Berührflächen bzw. Berührpunkte derart gering sind, daß aufgrund der Überstrahlwirkung der vorbehandelten Oberfläche erzielt werden kann, daß die Berührflächen ebenfalls nach der Gegenelektrode 17 eine Vorbehandlung aufweisen. Andererseits soll ermöglicht sein, daß die vorteilhafterweise nicht angetriebene Gegenelektrode 17 durch die Materialbahn 16 mitgeschleppt wird, so daß eine Beschädigung der Oberfläche der Materialbahn 16 vermieden werden kann. Würde ein vollständiger Luftspalt 26 erzeugt werden, würde die Gegenelektrode 17 stillstehen, was zur Folge hätte, daß sich bei einem verringernden Luftspalt 26 die Materialbahn 16 kurzzeitig auf der Gegenelektrode 17 auftreffen würde und durch die erhöhte Reibung eine Oberflächenbeschädigung auftreten würde.

Des weiteren kann die Rändelung 22 durch eine Wellenform oder V-förmig ausgebildet sein. Des weiteren kann ggf. von Vorteil sein, daß radial gesehen, die Teilung der Vertiefungen 32 ungleichmäßig bzw. unregelmäßig ausgebildet ist. Dies kann beispielsweise dadurch geschehen, daß die länglichen Vertiefungen 32 bzw. die Abschnitte 33 breiter oder auch schmäler ausgebildet sein können.

Bei der Vorbehandlung einer nichtleitfähigen Materialbahn kann die Umfangsfläche der Gegenelektrode 17 metallisch ausgebildet sein. Vorteilhafterweise kann Aluminium oder eine Aluminiumlegierung oder dergleichen eingesetzt werden. Weitere Materialien sind ebenso möglich. Die Oberfläche der Gegenelektrode 17 kann nach der Einbringung der Rändelung 22 veredelt werden, so daß beispielsweise keine Grate oder scharfe Kanten nach dem Einbringen der Vertiefungen 25 stehen bleiben. Dies kann beispielsweise durch Anbringen einer Schicht aus Silikon oder dergleichen gegeben sein. Die Umfangsfläche der Gegenelektrode 17 kann des weiteren durch eine Eloxalschicht oder dergleichen veredelt sein, um darüber hinaus eine Erhöhung der Lebensdauer zu ermöglichen.

Die Herstellung der Vertiefungen kann beispielsweise bei der Rändelung 22 durch übliche Rändeltechniken ermöglicht sein. Des weiteren können geometrisch von dieser Rändelung 22 abweichende Vertiefungen spanlos oder durch Funkenerosion, mittels Lasertechnik, Wasserstrahlschneiden oder Ätzen oder sonstigen Abtragungsverfahren eingebracht werden. Insbesondere im letzteren Fall kann eine unregelmäßige Anordnung ausgebildet werden.

Bei der Oberflächenbehandlung einer leitfähigen Materialbahn 16 ist die Umfangsfläche der Gegenelektrode 17 mit einem Dielektrikum ausgebildet. Dadurch ist das Herstellungsverfahren zum Einbringen der Vertiefungen 32, 36 an das entsprechende Dielektrikum auszuwählen und anzupassen.

Die nichtleitfähigen Werkstoffe einer Materialbahn, wie beispielsweise Papier und Kunststoffe, können ebenfalls mit einer Gegenelektrode mit Dielektrikum behandelt werden.

In Fig. 5 ist ein schematisch vergrößerter Querschnitt der Rändelung 23 dargestellt. Diese rautenförmige Rändelung 23 ist vorteilhafterweise derart ausgebildet, daß keine Vorzugsrichtung vorgesehen ist. Dadurch kann die Materialbahn 16 ohne Abweichung in der Transportrichtung an der Gegenelektrode 17 umgelenkt werden. Es kann auch vorgesehen sein, daß beispielsweise an den äußeren Randbereichen der Gegenelektrode 17 jeweils eine Rändelung mit aufeinander zugerichteten Vorzugsrichtungen vorgesehen sind, wodurch erwirkt werden kann, daß die Materialbahn 16 in eine entsprechende Transportrichtung gezwungen wird. Die rautenförmigen Vertiefungen 36 weisen Eckpunkte 37, 38 auf, die kürzer voneinander entfernt sind, wie die Entfernung der Eckpunkte 39 und 41 ist. Da die Spannung der Materialbahn 16 senkrecht zur geometrischen Längsachse 24 verläuft, ist die Spannweite damit kürzer und die Gefahr des Einsinkens der Materialbahn 16 und damit die Verringerung der Tiefe der Vertiefung 36 geringer. Dennoch kann ein genügend großer Luftspalt gebildet werden. Ferner sind hier nicht nur die Vertiefungen vom Typ der Vertiefungen 36 vorhanden, sondern auch die Furchen 42 und 43, die sich an den vier Eckpunkten 37, 38, 39, 41 unter gleichbleibendem Winkel schneiden. Die Fig. 5 zeigt insofern lediglich einen schematisierten Schnitt also lediglich die Schnittfläche und nicht etwa auch noch die perspektivisch verlaufenden Kammlinien von Gipfel zu Gipfel.

Die Furchen 42, 43 verlaufen unter gleichen Winkel hinsichtlich der Umfangsrichtung und liegen im wesentlichen winkelhalbierend zur geometrischen Längsachse 24. Dadurch weist die Rändelung 23 eine symmetrische Ausbildung auf, so daß die Materialbahn 16 keine Tendenz hat nach links oder rechts zu laufen. Sollte diese Tendenz erwünscht sein, so kann diese durch bewußte Unsymmetrien im Rastermuster erzeugt werden. Weitere Rändelungen, die ähnlich der beispielhaft in Fig. 2a, 2b beziehungsweise Fig. 4 und 5 dargestellt sind, können ebenfalls eingesetzt werden.

Aufgrund der Bildung eines Quasi-Luftspaltes 26 zwischen der Gegenelektrode 17 und der Materialbahn 16 fällt in diesem Luftspalt 26 durch die Corona-Entladung Ozon an, welches über eine nicht näher dargestellte Absaugvorrichtung abgesaugt wird. Diese Absaugvorrichtung ist in Analogie zu der Absaugvorrichtung an den Elektroden 18 ausgebildet und wird entsprechend den Sicherheitsvorschriften beispielsweise über einen Ozonkatalysator behandelt, so daß das abgesaugte Luft-/Ozongemisch nach der Filtrierung in die Umgebung abgegeben werden kann.

Im Betrieb der Corona-Station 15 wird die Leistung, die die Elektroden 16, 17 abgeben, von beispielsweise 600 W von einer einseitigen Vorbehandlung der Materialbahn 16 auf ungefähr 800 W für eine beidseitige Vorbehandlung der Materialbahn 16 erhöht. Diese Leistung kann jedoch anwendungsspezifisch eingestellt werden, wobei sich die abzugebende Leistung im wesentlichen nach der Breite der Folie als auch nach der Foliengeschwindigkeit richtet. Durch die Vorbehandlung wird ermöglicht, daß die Oberflächenspannung von beispielsweise 32 mN/mm² auf einen Wert von ungefähr 56 mN/mm² erhöht werden kann.

Durch die Erfindung kann somit ermöglicht sein, daß auch bereits sich im Einsatz befindende Corona-Stationen auf einfache und kostengünstige Weise für eine beidseitige Vorbehandlung der Materialbahn nachrüstbar sind, in dem die Gegenelektrode 17 ausgetauscht und die Leistung des Generators angepaßt wird.

Das Verhältnis zwischen den Berührflächen bzw. den Berührpunkten und den Vertiefungen an der Umfangsfläche der Gegenelektrode 17 als auch das Einblasen von Luft stehen in einem bestimmten Größenverhältnis. Einerseits ist erforderlich, daß eine Mindesttragfläche durch die Umfangsfläche der Gegenelektrode 17 gegeben ist, damit eine Beschädigung bzw. Beeinträchtigung der Materialbahn 16 durch sich darin abdrückende Spitzen oder Vertiefungen oder dergleichen nicht gegeben ist und andererseits ein hinreichend großer Luftspalt erzielt werden kann, um die Vorbehandlung zu ermöglichen. Darüber hinaus muß für eine vollflächige Bahnbehandlung die Vorbehandlung eine derartige Fläche der Materialbahn 16 einnehmen, daß trotz den Berührflächen an der Gegenelektrode 17 ein Überstrahleffekt gegeben ist, wodurch die an der Gegenelektrode 17 anliegenden Bereiche der Materialbahn 16 gegebenenfalls nach Verlassen der Gegenelektrode 17 ebenfalls an der Oberfläche aufgebrochen und somit vorbehandelt werden. Besonders vorteilhaft ist die Ausbildung einer Rasterung, bei der die Fläche der Vertiefungen gegenüber den Erhöhungen um ein Vielfaches ausgebildet ist, so daß zum einen für die an der Gegenelektrode anliegende Oberfläche eine ausreichende Tragfläche geschaffen ist und andererseits die Rasterung keine Struktur auf der Oberfläche abgibt.

Die Auslegung der Gegenelektrode 17 erfordert zumindest eine Abstimmung der Größe und Form der Vertiefungen 32, 36 sowie der dazwischen liegenden Abschnitte 33. Des weiteren ist die Bahngeschwindigkeit zu berücksichtigen. Bei Bahngeschwindigkeiten der Materialbahn 17 unter ungefähr 200 m/min. wird ein Abheben der Materialbahn von der Gegenelektrode 17 kaum erfolgen, so daß die Rasterung entsprechend kleiner auszubilden ist, das heißt, daß die Berührlinien oder -punkte näher zueinander beabstandet sind. Der durch die Bahngeschwindigkeit auftretende Effekt ist wiederum von dem Umschlingungswinkel der Materialbahn 17 an der Gegenelektrode 17 abhängig und zu berücksichtigen, wobei je geringer der Umschlingungswinkel ist, desto höher kann die Bahngeschwindigkeit sein und desto größer können die Berührlinien oder -punkte voneinander beabstandet sein. Die Bahngeschwindigkeit ist des weiteren darauf anzupassen, daß der Seitenverlauf beherrschbar bleibt. Vorteilhafterweise wird der Auslegung der Rändelung auf die empfindlichen Materialien, geringe Bahngeschwindigkeiten und hoher Umschlingungswinkel abgestellt, um eine universell einsetzbare Gegenelektrode 17 zu schaffen. An diese und die nachfolgenden Parameter ist auch die Menge der Luftzuführung anzupassen.

## Patentansprüche

1. Corona-Station zur beidseitigen Vorbehandlung einer Materialbahn mit wenigstens einer über Anschlußmittel mit einer Hochspannungsversorgung anschließbaren Elektrode (18), einem Gehäuse, welches die Elektrode (18) sowie die Anschlußmittel wenigstens teilweise aufnimmt und mit wenigstens einer walzenförmig ausgebildeten Gegenelektrode (17), die an ihrer Umfangsfläche Vertiefungen (25, 32, 36) aufweist, welche zumindest in Teilbereichen in Form einer regelmäßigen Rasterung (22, 23) angeordnet sind, **dadurch gekennzeichnet, daß** in Förderrichtung der Materialbahn (16) gesehen zumindest vor der Gegenelektrode (17) eine Luftdüse (52) zur Bildung eines Quasi-Luftspaltes zwischen Materialbahn (16) und Gegenelektrode (17) vorgesehen ist wodurch die Materialbahn (16) nicht vollflächig an der Gegenelektrode (17) anliegt.

2. Corona-Station nach Anspruch 1, **dadurch gekennzeichnet, daß** unmittelbar nach dem Abheben der Materialbahn (16) von der Gegenelektrode (17) eine weitere Elektrode (18) vorgesehen ist.

3. Corona-Station nach Anspruch 1 oder 2, **dadurch gekennzeichnet, daß** die Rasterung (23) quer zur Transportrichtung (29) zumindest keine wesentliche Vorzugsrichtung aufweist.

4. Corona-Station nach einem der vorhergehenden Ansprüche, **dadurch gekennzeichnet, daß** die Vertiefungen (25, 32, 36) in mehreren verschiedenen Rastermustern oder in teilweise gleichen oder verschiedenen Rastermustern über die Umfangsfläche auf einer Gegenelektrode (17) verteilt sind.

5. Corona-Station nach einem der Ansprüche 1 bis 4, **dadurch gekennzeichnet, daß** die Vertiefungen (25, 32, 36) vorzugsweise spanlos in der Umfangsfläche der Gegenelektrode (17) eingebracht oder aufgebracht, insbesondere mit einer Rändel- oder Kordelvorrichtung in die Umfangsfläche eingedrückt sind.

6. Corona-Station nach einem der vorhergehenden Ansprüche, **dadurch gekennzeichnet, daß** an dem Gehäuse oder mittelbar damit verbunden für die coronabehandelte Unterseite der Materialbahn (16) eine Absaugvorrichtung (51) vorgesehen ist.

7. Corona-Station nach einem der vorhergehenden Ansprüche, **dadurch gekennzeichnet, daß** für die Vorbehandlung einer nichtleitfähigen Materialbahn (16) die Vertiefungen (25, 32, 36) unmittelbar in einer leitenden Umfangsfläche der Gegenelektrode (17) vorgesehen sind.

8. Corona-Station nach einem der Ansprüche 1 bis 6, **dadurch gekennzeichnet, daß** für die Vorbehandlung einer leitfähigen oder teilleitfähigen Materialbahn (16) die Gegenelektrode (17) mit Hochspannung versorgt ist und die Gegenelektrode (17) eine mit einem Dielektrikum versehene Umfangsfläche aufweist, in der die Vertiefungen (25, 32, 36) vorgesehen sind und die leitfähige oder teilleitfähige Materialbahn ein Erdpotential aufweist.

## Claims

1. A corona station for pretreating a material web, having at least one electrode (18), which is connected to a high-voltage supply via connecting means, having a housing which at least partially accommodates the electrode (18) and the connecting means, and having at least one counter-electrode (17) of cylindrical construction, the counter-electrode (17) has depressions (25, 32, 36) on its circumferential surface, the depressions are arranged at least in subregions in the form of a regular grid (22, 23), **characterized in that** an air nozzle (52) is provided at least upstream of the counter-electrode (17), seen in the conveying direction of the material web (16), for providing a quasi air gap between the material web (16) and the counter-electrode (17), whereby the material web (16) does not bear with its whole surface against the counter-electrode (17).

2. The corona station according to claim 1, **characterized in that** a further electrode (18) is provided immediately after the material web (16) lifts off the counter-electrode (17).

3. The corona station according to claim 1 or 2, **characterized in that** transverse to the transport direction (29) the grid (23) has at least no substantial preferred direction.

4. The corona station according to one of the preceding claims, **characterized in that** the depressions (25, 32, 36) are distributed in a plurality of different grid patterns or in partially identical or different grid patterns over the circumferential surface of a counter-electrode (17).

5. The corona station according claims 1 to 4, **characterized in that** the depressions (25, 32, 36) are preferably introduced or applied in the circumferential surface of the counter-electrode (17) without cutting, particularly with the aid of a knurling tool.

6. The corona station according to one of the preceding claims, **characterized in that** a suction device (51) is provided on the housing, or in a fashion indirectly connected thereto, for the corona-treated underside of the material web (16).

7. The corona station according to one of the preceding claims, **characterized in that** for pretreating a non-conductive material web (16) the depressions (25, 32, 36) are provided directly in a conducting circumferential surface of the counter-electrode (17).

8. The corona station according to one of the claims 1 to 6, **characterized in that** for pretreating a conductive of partially conductive material web (16) the counter-electrode (17) is provided with high voltage, and the counter-electrode (17) has a circumferential surface, which is provided with a dielectric and in which the depressions (25, 32, 36) are provided and the conductive or partially conductive material web has an earth potential.

## Revendications

1. Station corona pour le prétraitement sur les deux faces d'une bande de matière, avec au moins une électrode (18) pouvant être raccordée à une alimentation de haute tension par l'intermédiaire de moyens de raccordement, un boîtier qui contient l'électrode (18) ainsi qu'au moins en partie les moyens de raccordement, et avec au moins une contre-électrode (17) configurée en forme de cylindre, qui présente dans sa surface latérale des creux (25, 32, 36) qui sont disposés sous la forme d'une trame régulière (22, 23) dans au moins des zones partielles, **caractérisée en ce que**, en regardant dans le sens de défilement de la bande de matière (16), il est prévu au moins avant la contre-électrode (17) une buse à air (52) pour la formation d'un quasi film d'air entre la bande de matière (16) et la contre-électrode (17), grâce à laquelle la bande de matière (16) ne repose pas entièrement sur la contre-électrode (17).

2. Station corona suivant la revendication 1, **caractérisée en ce qu'**il est prévu une autre électrode (18) immédiatement après la séparation de la bande de matière (16) de la contre-électrode (17).

3. Station corona suivant la revendication 1 ou 2, **caractérisée en ce que** la trame (23) ne présente au moins aucune direction préférentielle sensible transversalement au sens de transport (29).

4. Station corona suivant l'une quelconque des revendications précédentes, **caractérisée en ce que** les creux (25, 32, 36) sont répartis en plusieurs motifs de trame différents ou en motifs de trame partiellement identiques ou différents dans la surface latérale d'une contre-électrode (17).

5. Station corona suivant l'une quelconque des revendications 1 à 4, **caractérisée en ce que** les creux (25, 32, 36) sont ménagés ou réalisés dans la surface latérale de la contre-électrode (17), de préférence sans enlèvement de matière, en particulier par enfoncement avec un dispositif de moletage ou de moletage en X.

6. Station corona suivant l'une quelconque des revendications précédentes, **caractérisée en ce qu'**il est prévu, sur le boîtier ou assemblé indirectement à celui-ci, un dispositif d'aspiration (51) pour la face inférieure de la bande de matière (16), ayant subi le traitement corona.

7. Station corona suivant l'une quelconque des revendications précédentes, **caractérisée en ce que**, pour le prétraitement d'une bande de matière (16) non conductrice, les creux (25, 32, 36) sont prévus directement dans une surface latérale conductrice de la contre-électrode (17).

8. Station corona suivant l'une quelconque des revendications 1 à 6, **caractérisée en ce que** la contre-électrode (17) est alimentée en haute tension pour le prétraitement d'une bande de matière (16) conductrice ou partiellement conductrice et **en ce que** la contre-électrode (17) présente une surface latérale garnie d'un diélectrique, dans laquelle les creux (25, 32, 36) sont prévus et la bande de matière conductrice ou partiellement conductrice présente un potentiel de terre.
